# EUROPEAN PATENT SPECIFICATION

(11) **EP 1 491 790 B1**
(45) Date of publication and mention of the grant of the patent: **24.11.2010**
(21) Application number: 03291577.9
(22) Date of filing: 26.06.2003
(51) Int. Cl.: F16F 1/387, F16F 1/38, F16F 3/087

(54) **Engine mounts having tuning capabilities and engine decking anti-rotational features**
Abstimmbare Motorlagern mit Endanschlag antirotations Merkmale
Supports moteur réglables ayant des caractéristiques anti-rotation en fin de course

(43) Date of publication of application: 29.12.2004
(60) Divisional application: 10176699.6
(73) Proprietor: LORD CORPORATION, Cary, NC 27512-8012 (US)
(72) Inventor: Campanelli, Marcello, 6700 Strasbourg (FR); Flower, Wallace C., Erie, PA 16506 (US); Kuester, Ulrich A., Spring Lake, MI 49417 (US); Casbohm, Chris E., Albion, PA 16401 (US); Lefferts, Scott R., Fairview, PA 16415 (US)
(74) Representative: Dunlop, Brian Kenneth Charles

(56) References cited:
- EP-A- 0 632 211
- EP-A- 1 184 589
- WO-A-2004/038250
- BE-A- 548 906
- DE-A- 3 440 759
- GB-A- 758 591
- GB-A- 1 454 145
- US-A- 3 731 896
- US-A- 5 290 018
- US-A- 6 105 944
- US-B1- 6 270 066
- US-B1- 6 460 822

## Description

### FIELD OF THE,INVENTION

The present invention relates generally to engine mounts of the type used to support and isolate an engine from a vehicle chassis, such as in trucks. More specifically, the present invention relates to such engine mounts that are elastomeric and that have stiffness tuning capabilities and anti-rotational features useful during engine decking operations where the engine power-train is assembled with the vehicle chassis truck frame.

### BACKGROUND OF THE INVENTION

Elastomeric engine mounts in a vehicle serve three main purposes: they absorb the vibrations induced by the driving surface in the wheel axles of the vehicle body, they isolate engine vibrations from the body of the vehicle, and they also support the weight of the power-train. For many applications, elastomeric engine mounts must be rugged enough to take the pounding from traversing poor and/or unimproved roads. Additionally, these mounts should be designed to avoid total disconnect of the power-train from the engine support in the event of elastomer failure (i.e., the mounts should be safetied). Finally, providing snubbing (i.e., progressive stiffness increase to limit maximum motion) in all three orthogonal directions is desirable because it protects the power-train of the vehicle, improves the subjective ride quality of the vehicle, and reduces unwanted mechanical chatter that may otherwise be caused by harsh metal-to-metal contact.

The driving-induced vibrations of the wheel axles of the vehicle are generally of low frequency, and in contrast, the vibrations occurring from operation of the engine are generally of a substantially higher frequency that can be manifested as an acoustic disturbance. It is therefore important to reach a compromise between controlling the driving-induced vibrations in the wheel axles of the vehicle and the vibrations occurring during operation of the engine
when selecting the elastic modulus and damping capabilities of an elastomeric engine mount.

EP-A-1184589 describes a mount in which cyndrical inserts 5 are provided in a resilient deformtable body that is bonded to an inner part of the mounted.
BE-A-548906 describes a mount in which planar inserts are used to alter the compression of an elastomeric body.

### SUMMARY OF THE INVENTION

This invention is set out in claim 1. Some embodiments comprise four outer plastics inserts. Additionally, some embodiments comprise four double chevron elastomeric pads as the elastomeric portion, while other embodiments comprise a single web of elastomeric material having a plurality of legs extending therefrom as the elastomeric portion. The elastomeric portion and the outer plastics insert(s) may be easily modified to provide quick tunability to the engine mount so that various stiffness requirements can be accommodated. Additionally, various embodiments of the outer housing are possible so that many different mounting options can be provided. Furthermore, in various embodiments features of the engine joint interface (i.e., the v-shaped anti-rotation pockets/features) may be present on the inner member. In many embodiments, one end of each double chevron elastomeric pad may be bonded to the inner member, and then the plastics inserts may be bonded to the other ends of the double chevron elastomeric pads to form an inner assembly. The inner assembly may then be pre-compressed and inserted into the outer housing to form an engine mount.

Embodiments of this invention include engine mounts capable of supporting and isolating an engine from a vehicle chassis. The at least one elastomeric body may be in the form of an elastomeric pad which have the at least one elastomeric pad is attached to an outer surface of the interchangeable inner member, the at least one outer plastics insert is attached to an outer surface of the at least one elastomeric pad to form an inner assembly, and the inner assembly is inserted into the outer housing to form the engine mount. Preferably, the inner assembly is pre-compressed before being inserted into the outer housing. The engine mounts may comprise additional components such as: a modular lateral stiffener and a back plate.

The inner member of the engine mount preferably comprises a double v-shaped portion; and an anti-tilting, anti-rotation portion, wherein the double v-shaped portion is capable of allowing the elastomeric pads to be attached thereto and the anti-tilting, anti-rotation portion is capable of allowing the interchangeable inner member to be attached to the power-train, thereby impeding undesirable rotation of the engine mount during engine decking onto the vehicle frame. The outer plastics inserts are preferably capable of being modified to accommodate predetermined stiffness requirements so as to allow tunability of the engine mount.

The engine mounts of this invention have all the advantages of existing engine mounts, but they are elastomeric, lightweight, easy to assemble, easily modified, and have stiffness tuning capabilities, anti-rotational features, and interchangeable engine joint features, thereby making them superior to existing engine mounts.

Further features, aspects and advantages of the present invention will be more readily apparent to those skilled in the art during the course of the following description, wherein references are made to the accompanying figures which illustrate some preferred forms of the present invention, and wherein like characters of reference designate like parts throught the figures.

### DESCRIPTION OF THE DRAWINGS

The systems and methods of the present invention are described herein below with reference to various figures, in which:

Figures 1A and 1B show two perspective views of one embodiment of the outer housing of this invention;

Figures 2A and 2B show two perspective views of another embodiment of the outer housing of this invention;

Figure 3 shows a perspective view of yet another embodiment of the outer housing of this invention;

Figures 4A and 4B show two perspective views of yet another embodiment of the outer housing of this invention;

Figures 5A and 5B show two perspective views of yet another embodiment of the outer housing of this invention;

Figures 6A, 6B and 6C show three perspective views of one embodiment of the inner member of this invention;

Figures 7A, 7B and 7C show three perspective views of another embodiment of the inner member of this invention;

Figures 8A and 8B show two perspective views of another embodiment of the inner member of this invention;

Figures 9A and 9B show two perspective views of another embodiment of the inner member of this invention;

Figures 10A and 10B show two perspective views of another embodiment of the inner member of this invention;

Figures 11A and 11B show two perspective views of yet another embodiment of the inner member of this invention;

Figures 12A and 12B show two perspective views of yet another embodiment of the inner member of this invention;

Figures 13A and 13B show two perspective views of yet another embodiment of the inner member of this invention;

Figure 14 shows a perspective view of an embodiment of this invention, wherein the inner member comprises a bolt-retaining plate for easier removability of the removable studs during service;

Figure 15 shows a perspective view of an embodiment of the separate elastomeric pads of this invention;

Figure 16 shows a perspective view of an embodiment of a single piece elastomeric web of this invention;

Figures 17A, 17B and 17C show three perspective views of an embodiment of the outer plastics inserts for use on the top two elastomer pads of this invention;

Figure 18 shows a perspective view of another embodiment of the outer plastics inserts for use on the top two elastomer pads of this invention;

Figure 19 shows a perspective view of yet another embodiment of the outer plastics inserts for use on the top two elastomer pads of this invention;

Figures 20A and 20B show two perspective views of an embodiment of the outer plastics inserts for use on the bottom two elastomer pads of this invention;

Figure 21 shows a perspective view of another embodiment of the outer plastics inserts for use on the bottom two elastomer pads of this invention;

Figures 22A, 22B and 22C show three perspective views of an embodiment of an inner assembly of this invention;

Figures 23A and 23B show two perspective views of another embodiment of an inner assembly of this invention;

Figure 24A and 24B show two perspective views of yet another embodiment of an inner assembly of this invention;

Figures 25A and 25B show two perspective views of another embodiment of an inner assembly of this invention;

Figures 26A and 26B show two perspective views of another embodiment of an inner assembly of this invention;

Figures 27A and 27B show two perspective views of an embodiment of a fully assembled engine mount of this invention;

Figure 28 shows a perspective view of another embodiment of a fully assembled engine mount of this invention;

Figure 29 shows a perspective view of yet another embodiment of a fully assembled engine mount of this invention;

Figures 30A and 30B show two perspective views of yet another embodiment of a fully assembled engine mount of this invention;

Figures 31A and 31B show two perspective views of yet another embodiment of a fully assembled engine mount of this invention;

Figures 32A and 32B show two perspective views of yet another embodiment of a fully assembled engine mount of this invention; and

Figure 33 shows a perspective view of yet another embodiment of a fully assembled engine mount of this invention;

Figure 34 shows a perspective view of a modular lateral stiffener disposed within a hole in the back of an inner member in one embodiment of this invention; and

Figure 35a-c show preferred embodiments of the invention.

### DETAILED DESCRIPTION OF THE INVENTION

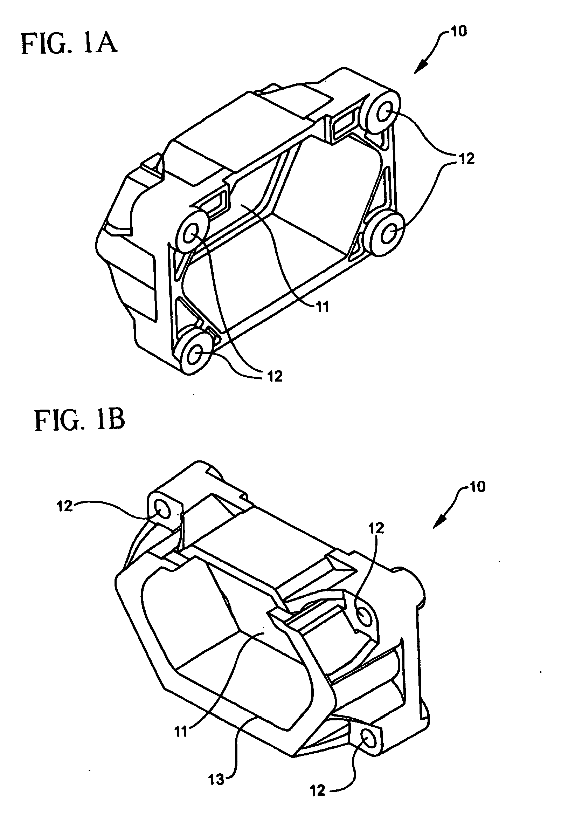

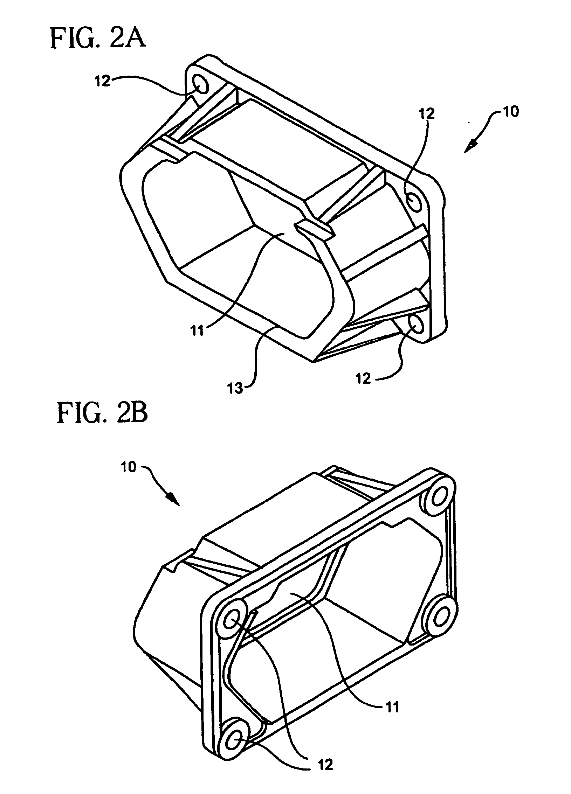

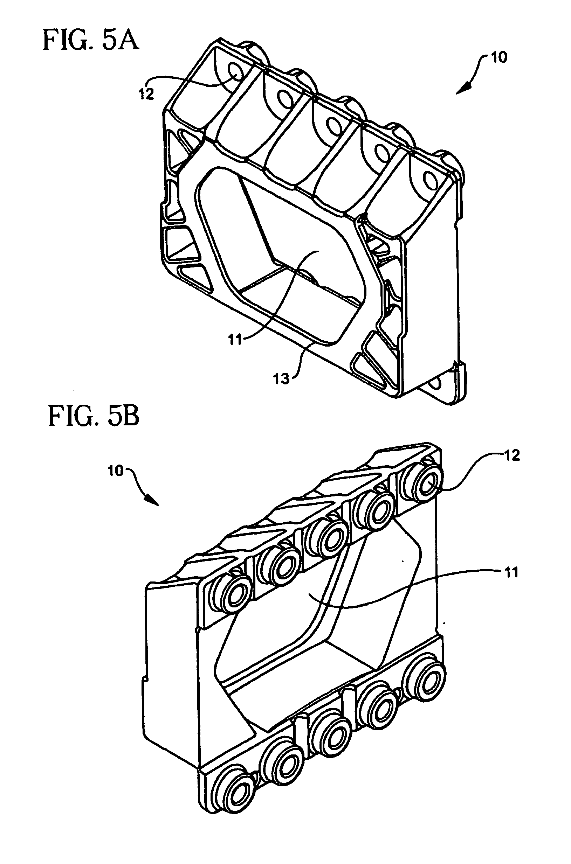

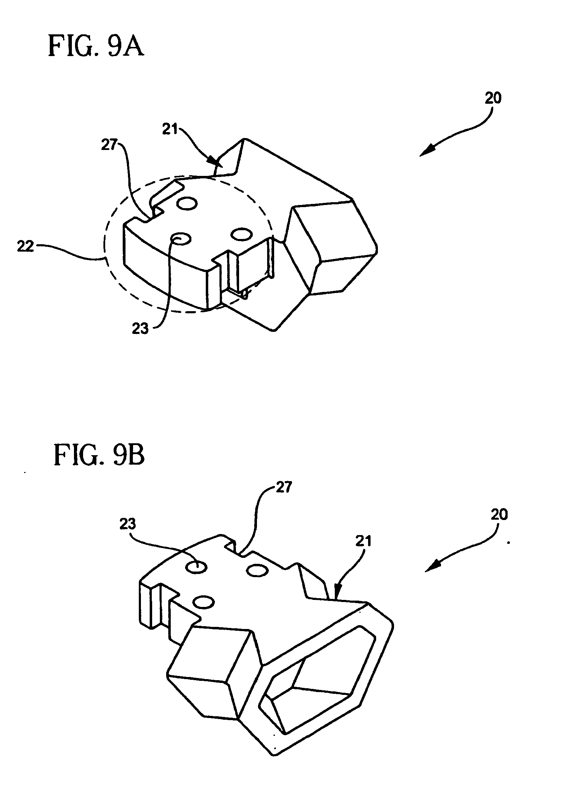

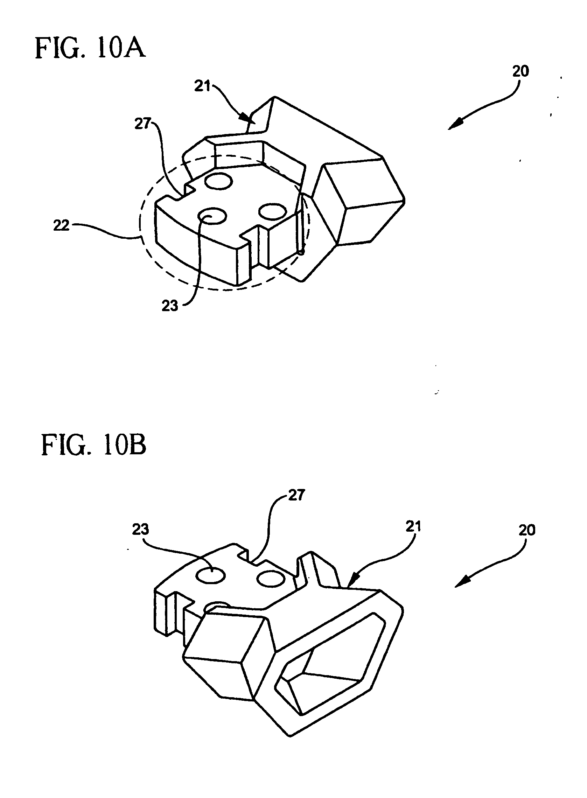

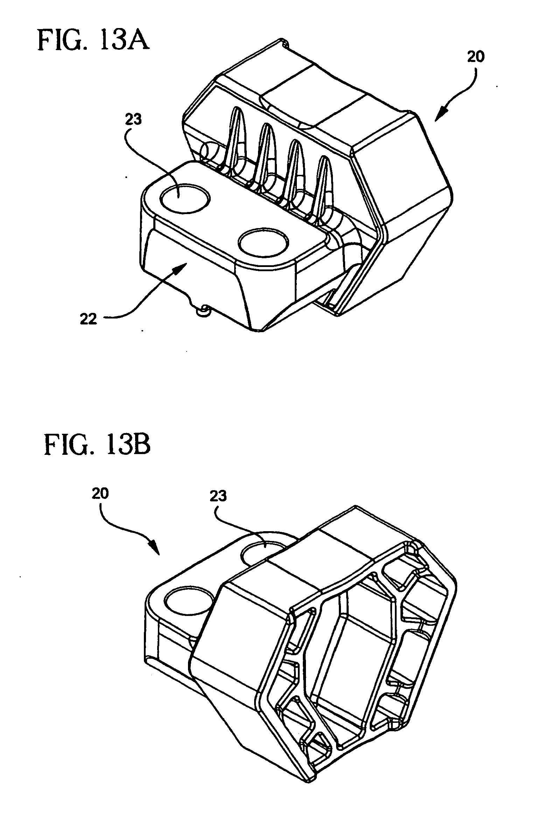

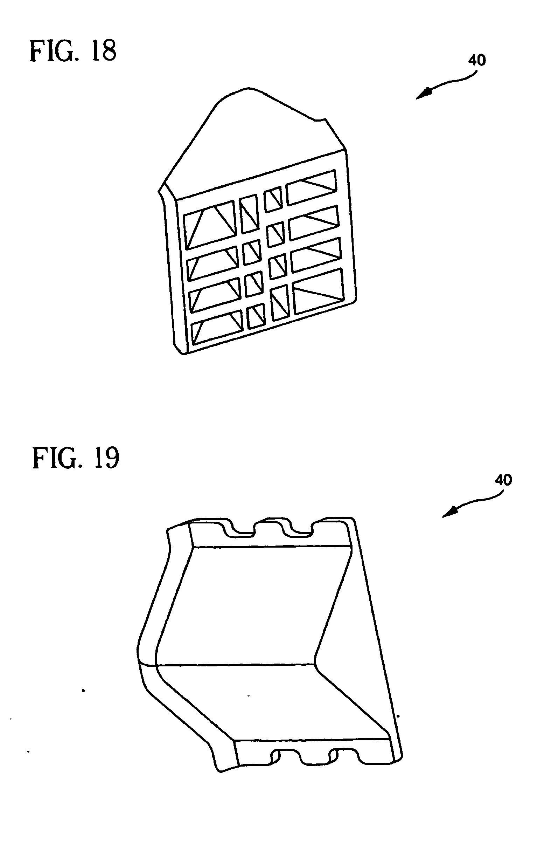

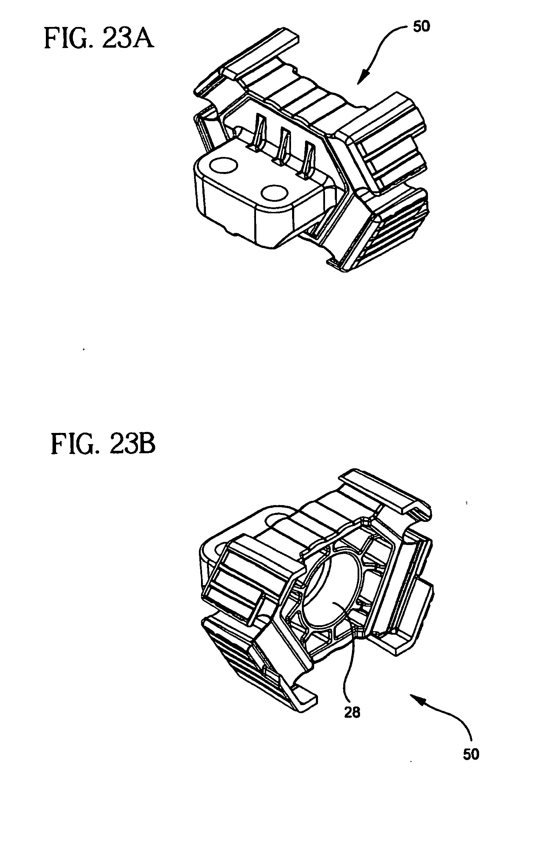

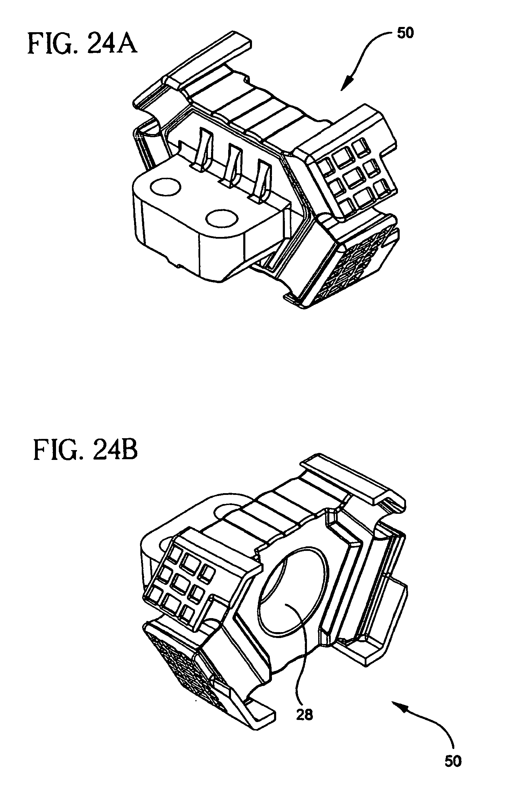

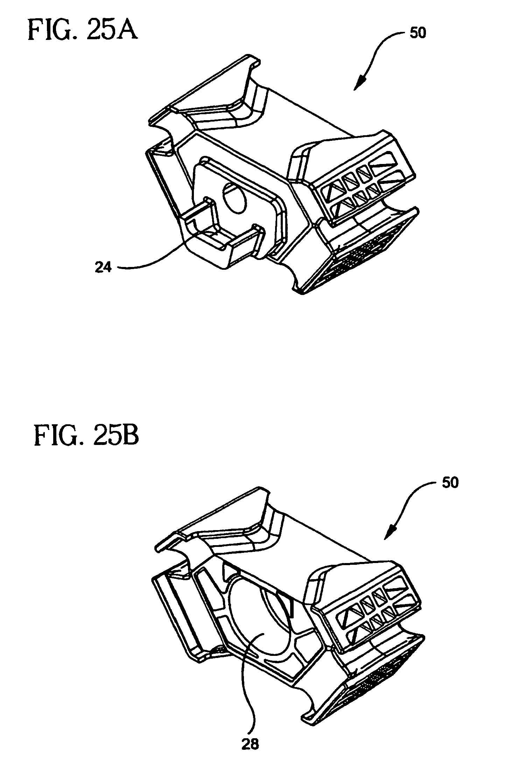

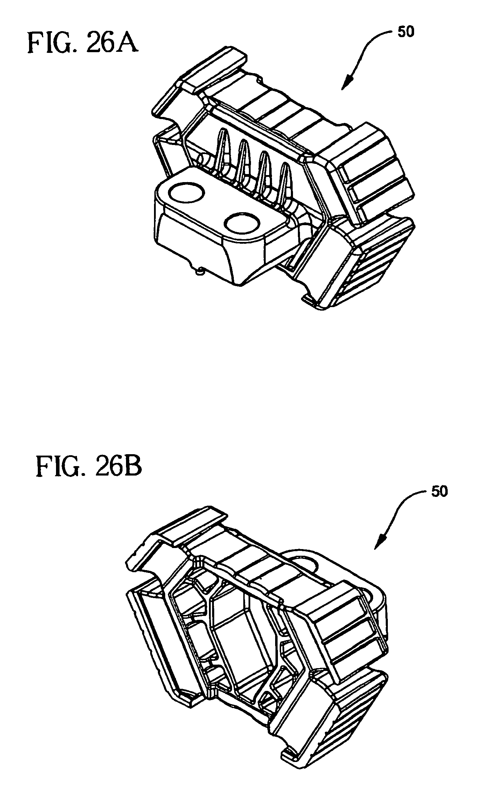

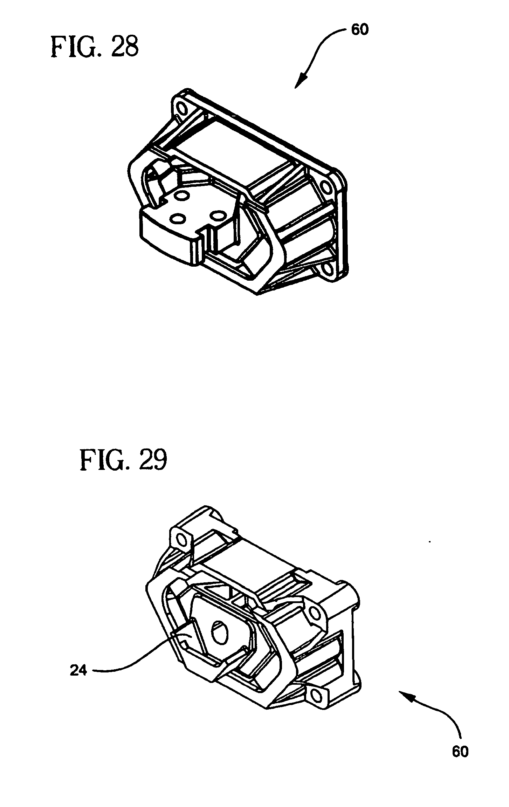

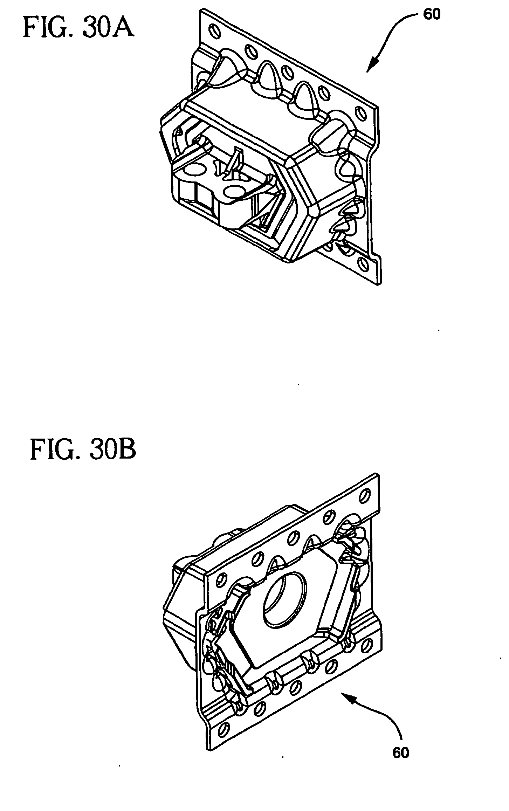

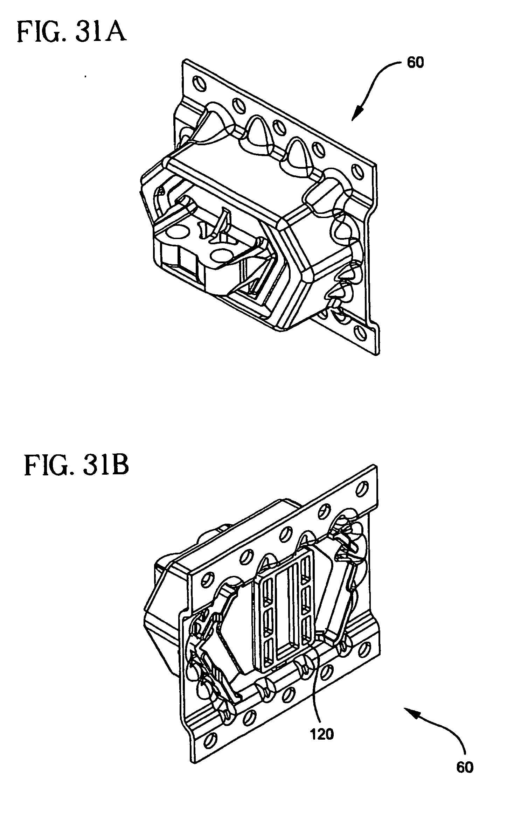

For the purposes of promoting an understanding of the invention, reference will now be made to some preferred embodiments of aspects of the present invention as illustrated in FIGURES 1-35, and specific language used to describe the same. The terminology used herein is for the purpose of description, not limitation. Specific structural and functional details disclosed herein are not to be interpreted as limiting, but merely as a basis for the claims as a representative basis for teaching one skilled in the art to variously employ the present invention. Any modifications or variations in the depicted systems and methods, and such further applications of the principles of the invention as illustrated herein, as would normally occur to one skilled in the art, are considered to be within this invention, as defined in the appended claims.

The present invention comprises elastomeric rear engine mounts that are useful for reducing the amount of engine vibration that is transmitted between the engine and the vehicle chassis. Embodiments of this invention comprise engine mounts that have an inner member with v-shaped anti-rotation pockets. Embodiments of this invention also comprise engine mounts that have a modular v-shaped engine mount that has stiffness tuning capabilities. These engine mounts allow a large relative motion between the engine and the vehicle frame. Additionally, many embodiments can be tuned up to meet different or changing stiffness requirements. Furthermore, the outer plastics inserts allow the overall weight of the mounts to be reduced, and also allow the mounts to be modified and tuned as needed. Moreover, numerous different interchangeable inner members may be provided that allow for various ways to join the engine mounts to the engine/power-train of the vehicle.

At least some of the engine mounts described herein provide many of the following advantages: (1) the mounts are highly tunable; (2) the mounts provide great flexibility in terms of static vertical load, and their performance is largely independent of the vertical static load; (3) the mounts are very light (i.e., fully assembled they weigh from about 4.0kg to about 5.5kg); (4) pre-compressing the inner assemblies of the mounts increases the durability of the mount; (5) the mounts provide an optimized compromise between cost and performance; (6) the mounts are simple to assemble; (7) the mounts comprise interchangeable inner members; and (8) the components of these mounts are modular so as to allow a broad range of customer and functionality needs to be easily satisfied.

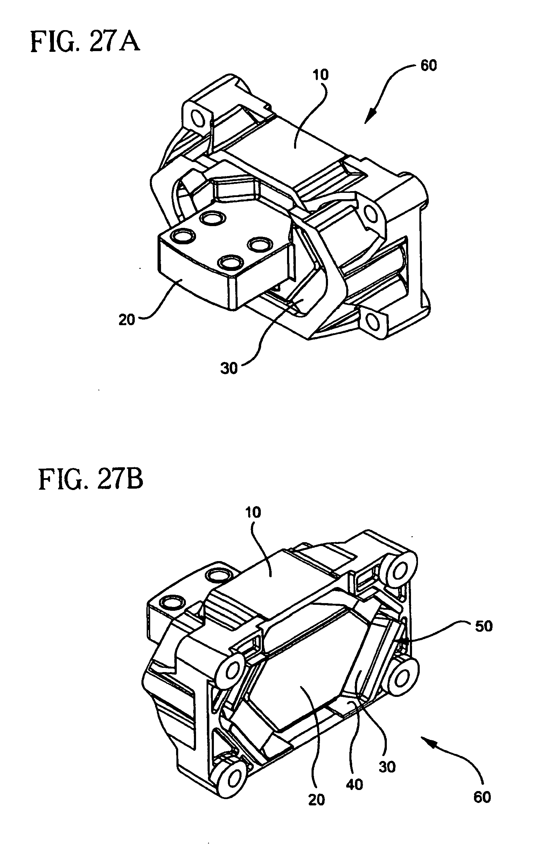

Figures 27A and 27B illustrate the generally assembly of one embodiment of an engine mount. The mount generally indicated at 60 comprises the following main components: an outer housing 10, an interchangeable double v-shaped inner member 20, four double chevron elastomeric pads or bodies 30, and four outer plastics inserts 40. Preferably, the double v-shaped inner member 20, the four double chevron elastomeric pads 30, and the four outer plastics inserts 40 are assembled together into an inner assembly, generally indicated at 50. This inner assembly 50 is then pre-compressed and inserted into the outer housing 10 to form an engine mount 60. The components of the inner assembly 50 can be easily modified to tune the vertical-to-lateral and vertical-to-fore-aft stiffness ratios.

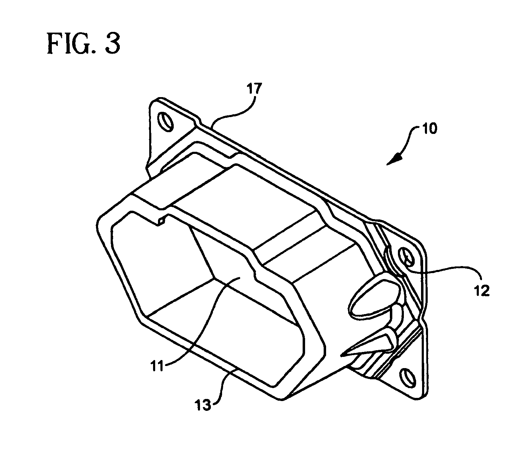

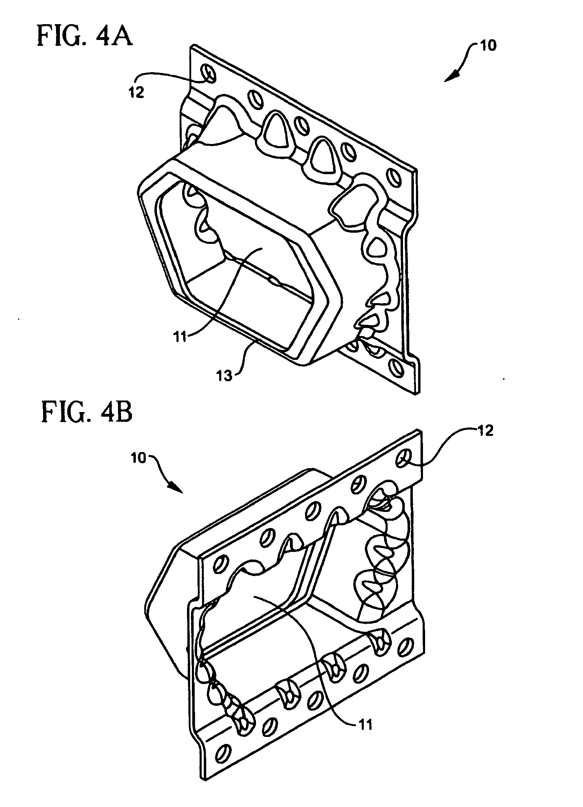

Turning to Figure 1A and 1B the outer housing 10 preferably comprises a laterally-extending cylindrical through-bore 11 having a substantially hexagonal shape into which an inner assembly 50 may be inserted. The outer housing 10 has bolt holes 12 bored therein for attaching the outer housing to the vehicle frame, although any appropriate fixing method may be utilised. The outer housing 10 may conveniently defined a lip 13 to provide lateral retention of the inner assembly 50 inserted therein, preventing the inner assembly being pushed straight through the bore 11. Other lateral restraints may be used. Several different non-limiting embodiments of the outer housing 10 are shown in Figures 1A, 1B, 2A, 2B, 3, 4A, 4B, 5A, and 5B respectively. The designs of the embodiments shown in Figures 1A, 1B, 2A, 2B, 5A, and 5B are particularly suitable for die-cast aluminum tooling purposes, while the designs of the embodiments shown in Figures 3, 4A, and 4B may be readily formed by stamped steel tooling. In addition to the embodiments depicted in these figures, numerous other designs of the outer housing are also possible.

The outer housing 10 may be made of any suitable structural material such as, for example, metal. The metal used may be die-cast aluminum to help reduce the weight of the mount, or high strength, low carbon steel may be used so the outer housing can be easily formed by normal stamping techniques. Alternatively a squeeze-cast or semi-solid forging aluminum process may be used to make the outer housing 10, if desired, so that the mechanical properties of the aluminum can be increased as compared to conventional die-cast aluminum. In one exemplary embodiment, stamped steel comprising high-strength low alloy steel (according to ASTM A656, Grade 80) having the following mechanical properties is used:

| Min. Yield Strength | Min. Tensile | Min. Elongation |
|---|---|---|
| 552 MPa | 690 MPa | 20% |

For cost and weight savings, with proper strength enhancements such as ribs, the outer housing 10 may also be made of an engineered plastics such as, for example, Nylon 66 with 50% glass fill. If the outer housing 10 is made of plastics, it may be necessary to include metal inserts in the bolt holes 12 for clamping purposes.

Stamping the outer housing 10 allows for variations (i.e., different frame widths) to be easily accommodated without requiring major modifications to any single component. For example, various vehicle frame widths may be accommodated by having a different step 17 stamped into the outer housing 10 so as to allow the appropriate clearance for the various stud plates and bolt heads that may be pre-mounted in the vehicle frame.

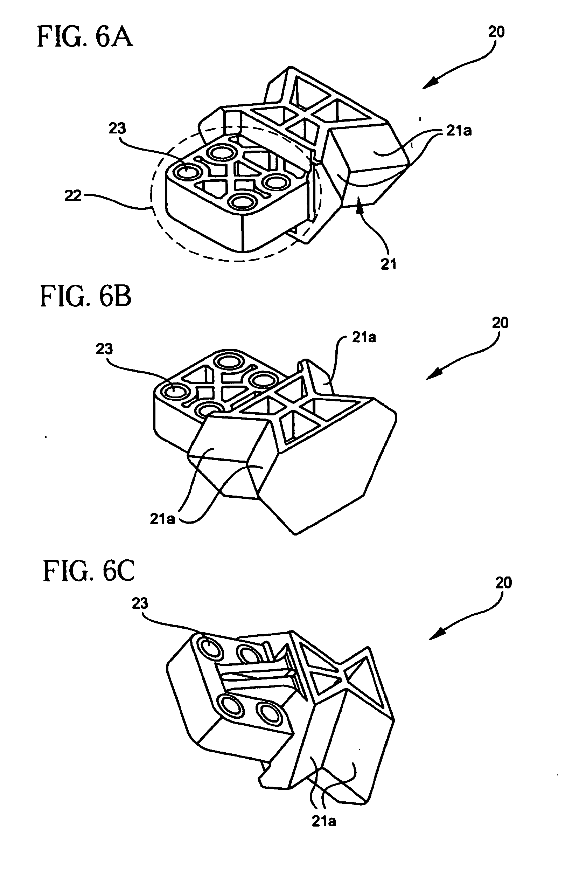

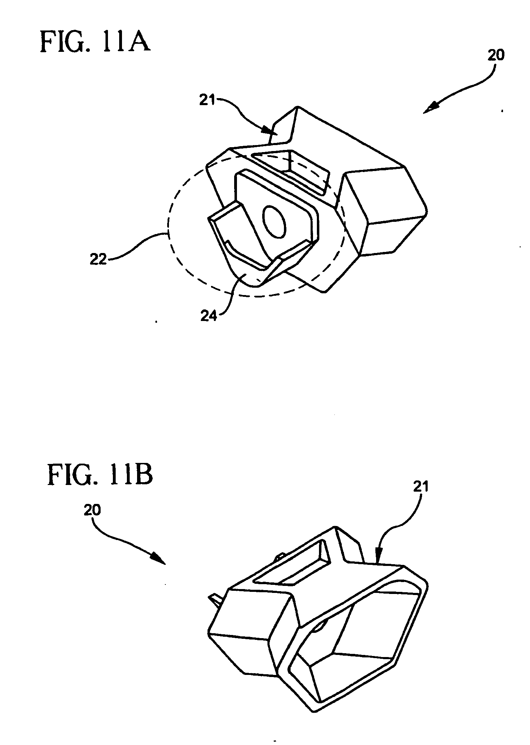

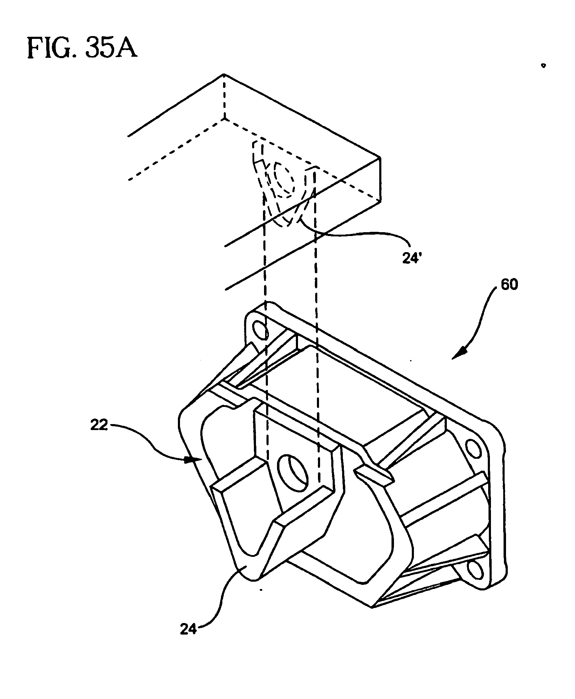

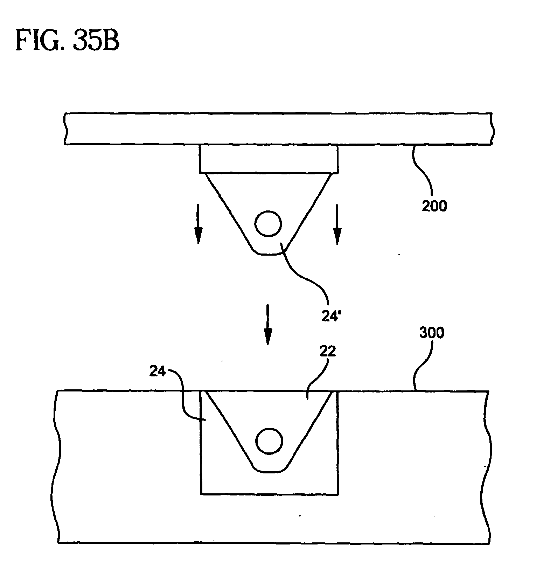

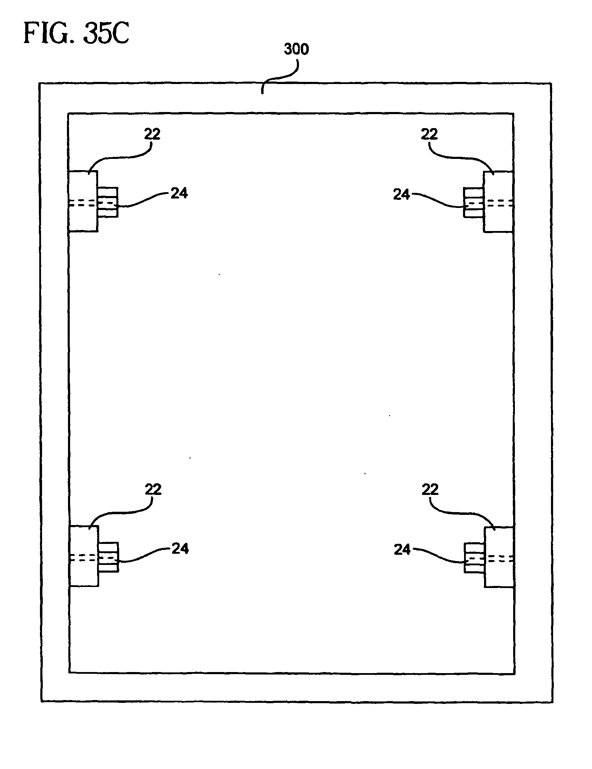

The double v-shaped inner member 20 preferably defines v-shaped indentedness or pockets portion 21 on its sides to receive elastomeric pad 30 that may be attached to faces 21 a. The inner member also preferably comprises an anti-tilting, anti-rotating portion 22, most preferably, as, for example, in the embodiment shown in Figure 11a, with a v-shaped pocket cradling receiving cup 24 on its front where the inner member may be attached to the vehicle power-train 200 having a corresponding matching male protrusion 24' which is received in cradling receiving cup 24 of anti-rotating portion 22. (See for example Figures 35a-c) This anti-tilting, anti-rotating portion 22 may be interchangeable and include features that help reduce the amount of cocking and/or rotating of the inner member 20 that may occur during engine decking. Rotation of the engine mount during engine decking is undesirable because it causes a misalignment between the mounting holes of the inner member and the holes in the bracket 24' on the engine. These anti-tilting, anti-rotating features hold the engine interconnect area (e.g., the engine joint area where male protrusion 24' is received in cup 24) together, even without having a bolt inserted therebetween. As shown in Figure 35a-c, this anti-tilting, anti-rotating feature allows the engine power-train 200 to be dropped into place in the vehicle 300 on the manufacturing line, where it can remain positioned inside the vehicle frame 300 without being bolted until it reaches a more suitable location for inserting the bolt off the main manufacturing assembly line. Several different non-limiting embodiments of the inner member 20 are shown in Figures 6A, 6B, 6C, 7A, 7B, 7C, 8A, 8B, 9A, 9B, 10A, 10B, 11A, 11B, 12A, 12B, 13A, and 13B.

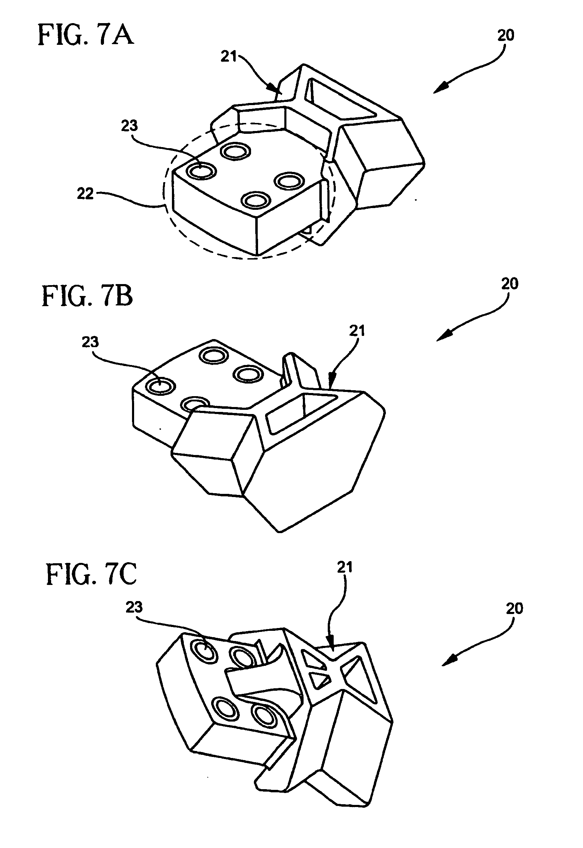

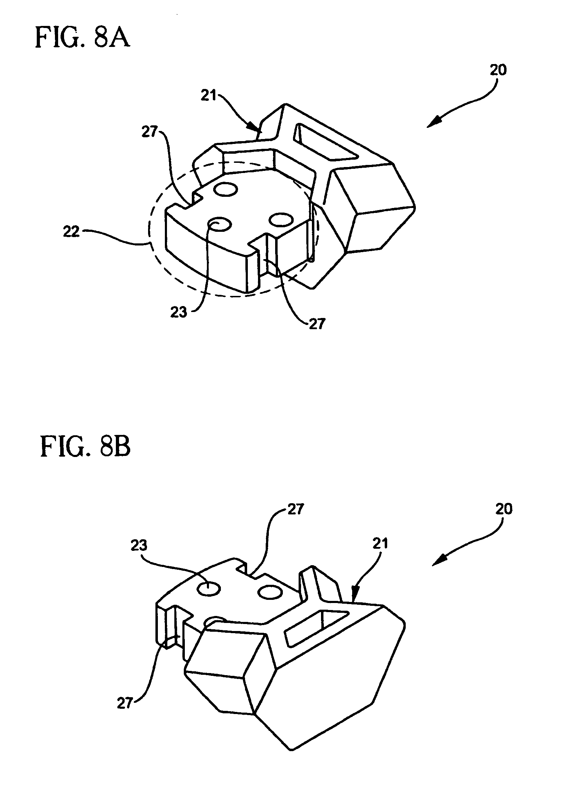

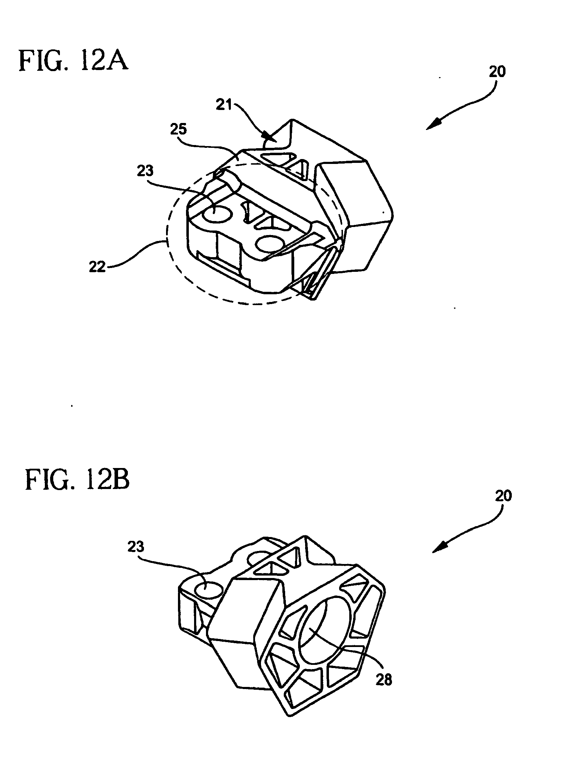

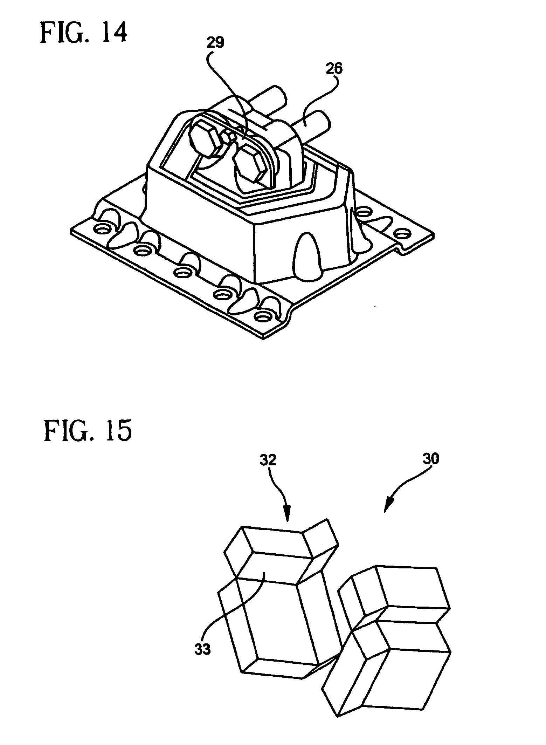

The anti-tilting, anti-rotating portion 22 of inner member 20 is the engine joining portion of the engine mount, used to attach the inner member of the engine mount to the power-train of the vehicle which preferably has a corresponding matching male protrusion which is received in v-pocket cradling receiving cup 24 of anti-rotating portion 22. This anti-tilting, anti-rotating portion 22 of the inner member 20 may contain holes 23 bored therein, as shown in Figures 6A, 6B, 6C, 7A, 7B, 7C, 8A, 8B, 9A, 9B, 10A, 10B, 12A, 12B, 13A, and 13B, or alternatively may comprise a v-shaped pocket cradling receiving cup 24, as shown in Figures 11A and 11B, FIG. 25A, FIG. 29, FIG. 33, FIG.35a-c embodiments. The holes 23 may comprise threaded inserts therein, as shown in Figures 6A, 6B, 6C, 7A, 7B, and 7C, or alternatively, the bottoms of these holes may comprise self-clinching nuts (not shown). This anti-tilting, anti-rotating portion 22 of the inner member 20 may also have removable studs to allow for easier engine decking and easier transmission servicing. Hexagonal-headed studs 26 could allow the studs to be easily removed from the bottom. A bolt-retaining plate 29, as shown in Figure 14, may be screwed or otherwise attached to the bottom of the inner member shelf for easier removability of the removable studs 26 during service. This anti-tilting, anti-rotating portion 22 of the inner member 20 may also comprise interlocking slots 27, as shown in Figures 8A, 8B, 9A, 9B, 10A, and 10B, to help prevent rotation during engine decking. Alternatively, the anti-tilting, anti-rotating portion 22 of the inner member 20 may comprise removable studs 26, or a shaped shelf portion 25, as shown in Figures 12A and 12B, to help impede the inner member's rotation during engine decking.

The interchangeable double v-shaped inner member 20 may be made of any suitable structural material, such as for example, ductile iron, or more preferably, cast aluminum, including but not limited to die-casting, permanent molding, squeeze-casting, and semi-solid forging aluminum. In one embodiment, the inner member 20 comprises a die-cast aluminum alloy A360.0 or equivalent having the following mechanical properties:

| Min. Yield Strength | Min. Tensile | Min. Elongation |
|---|---|---|
| 318 MPa | 160 MPa | 3.5% |

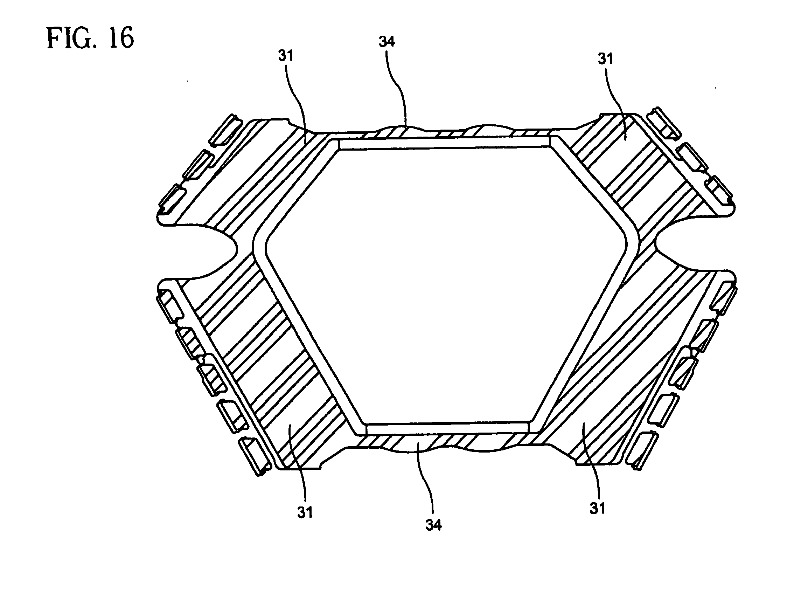

The elastomeric pads 30 may include a plurality of flexible legs 31 (see for example Figure 16) that will ultimately connect the inner member 20 and the outer housing 10 in a manner that lessens the vibration transferred between the engine and the chassis. In embodiments, there are four double chevron elastomeric pads 30, having v-shaped indentations 32 on one end for attaching to the outer plastics inserts, and having v-shaped protrusions 33 on the opposite end for attaching to the inner member. One non-limiting embodiment of these pads is shown in Figure 15. Alternatively, the elastomeric pad 30 could comprise one solid piece of elastomer having a plurality of legs 31 protruding therefrom, wherein the pairs of legs 31 on each side are connected to one another via a web of elastomeric material 34, as shown in Figure 16.

The elastomeric pads 30 can be formed from any suitable material that can withstand the environmental conditions normally found in an engine compartment, including elevated temperatures, oil, etc., such as for example, a high performance natural rubber having increased heat and fatigue resistance. However, other suitable flexible materials may be used interchangeably, such as blends of natural and synthetic elastomer, silicone rubber, nitrile, neoprene, fluorocarbon elastomer, or thermoplastics elastomers (TPE's), and the like. In one embodiment, the elastomeric pads 30 are made from a material meeting the following properties:

| | |
|---|---|
| - Heat resistant per ASTM D573, 70 hours @ 70°C: | |
| | - Change in hardness: +/- 5 points |
| | - Change in tensile strength: +/- 30% |
| | - Change in ultimate elongation: -50% |
| - Compression Set: 25% max. after 22 hours at 70°C | |
| - Resistance to ozone per ASTM D1171: 85% retention min. | |
| - Low temperature brittleness per ASTM D2137: not brittle at - 40°C | |

The size and shape of the elastomeric pads 30 can be individually designed such that each pad 30 has predetermined dynamic characteristics, or such that the engine mount 60 as a whole has predetermined dynamic characteristics. For example, in embodiments, the bottom two pads may be larger than the top two pads since the static engine load creates more compression strain on the bottom two pads than on the top two pads. Ideally, the elastomeric pads 30 are pre-compressed in the assembly to maximize fatigue life, allow long linear travel requirements without rubber strain reversal if needed, and decouple the stiffness in the three orthogonal directions for optimum tuning. Embodiments of this invention may also comprise a rubber strip on the outer surface(s) of the inner assembly 50 to provide increased retention friction between the inner assembly 50 and the outer housing 10.

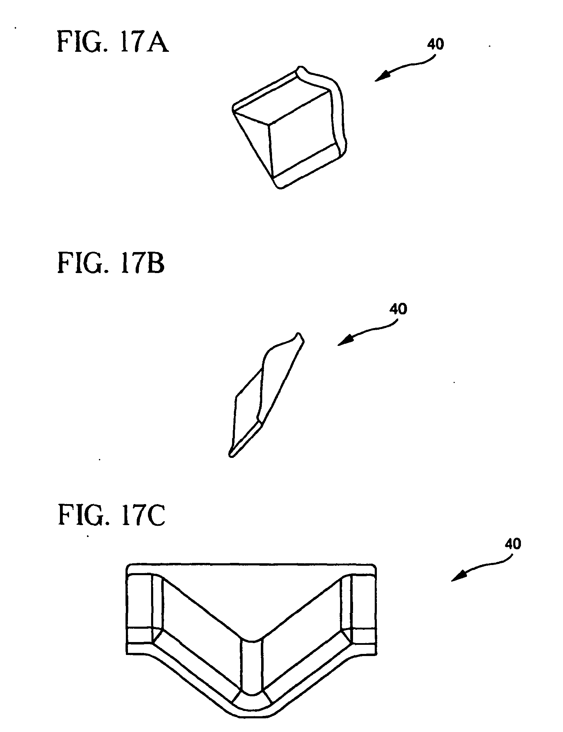

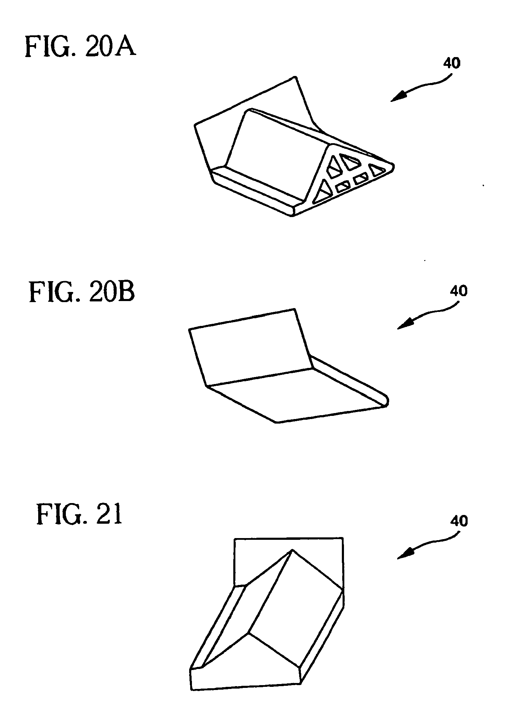

The outer plastics inserts 40 preferably comprise four separate v-shaped plastics pieces that may be attached to the ends of the four elastomeric pads 30, or that may be attached to the plurality of legs 31 extending from a solid piece of elastomer. Three non-limiting embodiments of these outer plastics inserts 40 for use on the top two elastomeric pads 30 are shown in Figures 17A, 17B, 17C, 18, and 19. Two non-limiting embodiments of these outer plastics inserts 40 for use on the bottom two elastomeric pads 30 are shown in Figures 20A, 20B, and 21. Many different designs for these v-shaped outer plastics inserts 40 are possible.

The four outer plastics inserts 40 may be made of any suitable engineering plastics composite material that is sufficiently strong, such as, for example, 30-44% glass filled polyamide. Additionally, these inserts may be made by any suitable process, such as, for example, injection molding. In one embodiment, the plastics inserts 40 comprise Polyamide 6 (44% glass filled) having the following mechanical properties:

| Min. Tensile Strength (DAM cond.) | Min. Tensile Strength (50% RH) | Min. Compression Strength |
|---|---|---|
| 230 MPa | 145 MPa | 267 MPa |

These inserts 40 may be easily modified to accommodate stiffness requirement changes, thereby providing quick tunability to the engine mount. For example, simply changing the thickness of the inserts 40, or by altering the angle of the inserts 40, various mount ratios can be accommodated quickly and easily, without requiring changes to any of the other mount components. These plastics inserts 40 may ultimately become the interface between the elastomeric pads 30 and the outer housing 10. Therefore, it is desirable that these plastics inserts 40 be self-lubricating so that the inner assembly 50 can be easily slid into the outer housing 10. As these plastics inserts 40 can only be loaded in compression, they thereby avoid reverse strain in the plastics material they are made of.

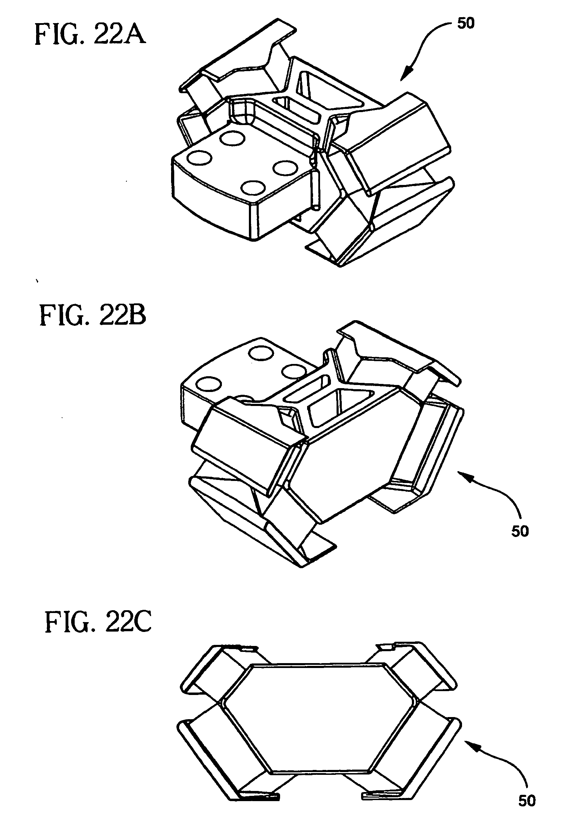

One end of the elastomeric pads 30 (i.e., the end having the v-shaped indentations 32) may be directly bonded to the plastics inserts 40, while the other end of the elastomeric pads (i.e., the end having the v-shaped protrusions 33) may be directly bonded to the inner member 20 to form the inner assembly 50. Five non-limiting embodiments of this inner assembly 50 are shown in Figures 22A, 22B, 22C, 23A, 23B, 24A, 24B, 25A, 25B, 26A, and 26B. Many different inner assemblies 50 are possible. These inner assemblies 50 may be removed and substituted with another inner assembly 50 so as to provide stiffness tuning and substitution for different applications. This inner assembly 50 is preferably pre-compressed and inserted into (i.e., pushed into) the outer housing 10 to form the engine mounts 60 of this invention. When the inner assembly 50 is inserted into the outer housing 10, the two mating surfaces thereof are brought together, preferably into engaging contact with one another, so as to result in each of the elastomeric components 30 experiencing preloading in both the compressive and shear directions. This preloading results in superior wear life of the elastomeric components 30. Several non-limiting embodiments of the fully assembled engine mounts 60 of this invention, are shown in Figures 27A, 27B, 28, 29, 30A, 30B, 31A, 31B, 32A, 32B, and 33.

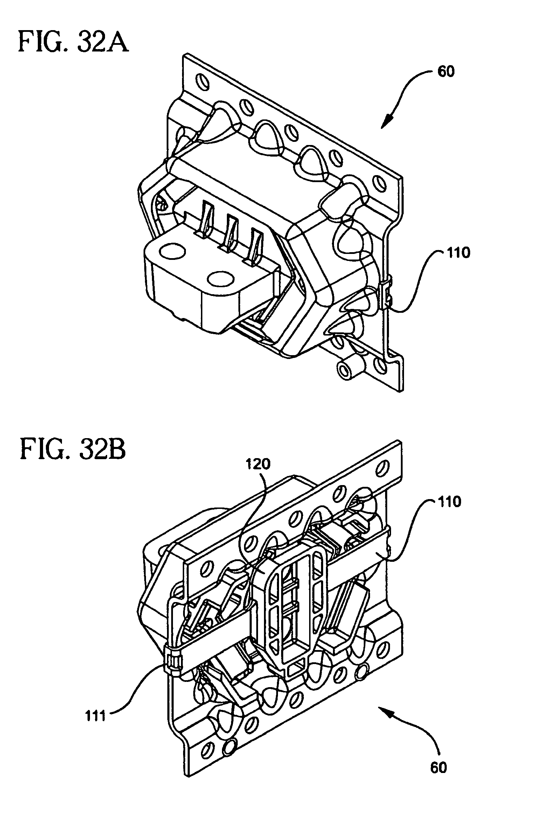

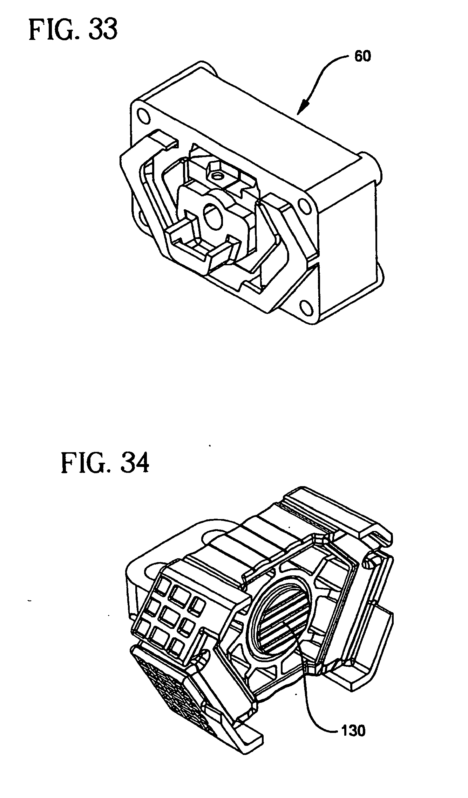

The engine mounts of this invention may also comprise many other components. For example, a modular lateral stiffener 130, as shown in Figure 34, preferably made of an engineering plastics material or an elastomeric rubber, may be inserted in a hole 28 (see for example Figure 12B) in the back of the inner member 20, or be attached to the back of the inner member 20, to provide the required high lateral stiffness, if desired and/or necessary. This modular lateral stiffener 130 may slide on or along a back plate 110 (which is preferably plastics, such as Polyamide 6/6, 40% glass filled, but may also be made out of metal such as steel, or any other suitable material) that is attached (i.e., snap-fit) to the outer housing 10 as shown in Figures 32A and 32B. This modular lateral stiffener 130 may also be attached to the outer housing 10 in any other suitable manner, such as by being riveted thereto. Using engineered plastics materials for the modular lateral stiffener 130 help to ensure that there is smooth sliding between the parts and optimizes the resistance at wear and maximum loads. Using a modular design for this lateral stiffener 130 allows for a wide range of vertical/lateral stiffness ratios to be accommodated. In other embodiments, the modular lateral stiffener 130 utilizes a simple compression pad to act in parallel with a main elastomer section to meet higher lateral stiffness requirements. In these embodiments, this lateral tuning feature comprises a bonded elastomer pad that, during lateral motion of the engine, is compressed between the inner member 20 and the back plate 110. In other embodiments, the bonded elastomer pad 130 may slide along the back of the back plate 110 as shown in Figures 32A and 32B. The modular lateral stiffener 130 increases the stiffness in the lateral direction, but has very little effect in the vertical and fore-aft directions. This is accomplished by using a material having a very low shear direction stiffness for the compression pad, and ensuring a very low coefficient of friction between the compression pad and the back plate 110. This may also be accomplished by using a self-lubricated engineering plastics material (i.e., acetal copolymer) for the bonded elastomer pad 130.

A back plate 110 may also be included if high lateral spring rate requirements exist. If high lateral stiffness is desired, the back plate 110 may provide the sliding surface for the lateral stiffener 130. In one embodiment, the back plate 110 comprises Polyamide 6/6 (40% glass filled) having the following mechanical properties:

| Min. Tensile Strength (23°C) | Min. Tensile Strength (23°C) | Min. Compression Strength (23°C) |
|---|---|---|
| 253 MPa | 358 MPa | 295MPa |

In some embodiments, this back plate 110 may be designed to snap into or onto the outer housing 10 via tabs 111, as shown in Figures 32A and 32B. Under lateral engine motion, the modular stiffener 130 presses the back plate 110 against the vehicle frame.

The metal components in these engine mounts 60 that are not encapsulated by elastomer may be chemically coated for corrosion protection. Any suitable chemical-resistant coating may be used. Additionally, if desired, the elastomeric portions may be coated with a suitable coating in an effort to increase the fatigue life of the elastomeric materials that are subjected to high temperatures over their life. Such coating of the elastomeric material helps reduce the heat build-up of the elastomer over time.

Advantageously, the described engine mounts provide anti-rotational and anti-tilt features during engine decking, consequently allowing for easier engine assembly onto a vehicle chassis. The engine mounts cradling receiving cup allow for temporary placement attachment of the engine power-train in the truck vehicle chassis frame in an assembly line operation and then later hard mounting securing of the engine power-train to the vehicle chassis frame via the engine mounts with bolting members inserted through still in alignment bolt hole bores. These engine mounts are also easily tunable for various applications and can include various interchangeable inner members.

Various embodiments of the invention have been described in fulfillment of the various needs that the invention meets. It should be recognized that these embodiments are merely illustrative of the principles of various embodiments of the present invention. Numerous modifications and adaptations thereof will be apparent to those skilled in the art without departing from the scope of the present invention. For example, while this invention has been described in terms of some illustrative embodiments, it will be apparent to those skilled in the art that numerous other embodiments of the outer housing, the inner member, the elastomeric pads, the plastics inserts, the inner assembly, combinations thereof, the modular lateral stiffener, and the back plate are possible. All such embodiments are intended to fall within the scope of this invention. Thus, it is intended that the present invention cover all suitable modifications and variations as come within the scope of the appended claims and their equivalents.

## Claims

1. An engine mount including an outer housing (10) and an inner assembly (50) including an inner member (20) and at least one elastomeric body (30) attached to an outer surface of the inner member (20), the inner assembly (50) being located in the outer housing (20) so that the elastomeric body (30) acts between the inner member (20) and the outer housing (10) **characterised in that** the inner member (20) is interchangeable and **in that** the mount includes at least one tuneable v-shaped outer plastics insert (40) interposed between the elastomeric body (30) and the outer housing (20), the at least one tuneable v-shaped plastics insert (40) interchangeable for tuning the engine mount.

2. A mount as claimed in claim 1, wherein the outer plastics insert (40) or inserts forms part of the inner assembly (50).

3. A mount as claimed in claim 1 or claim 2, wherein the outer plastics insert (40) is tuned by selecting an insert from a set of inserts having different physical characteristics.

4. A mount as claimed in any one of the preceding claims, wherein the inner assembly (50) is pre-compressed before being inserted into the outer housing (10).

5. A mount as claimed in any one of the preceding claims, wherein the inner assembly (30) includes a modular lateral stiffener (130).

6. A mount as claimed in claim 5, wherein the modular lateral stiffener (130) is capable of providing additional stiffness when high lateral stiffness is desired.

7. A mount as claimed in any of the preceding claims, wherein the inner assembly further includes a plate (110) for providing a sliding and retaining surface for the modular lateral stiffener (130).

8. A mount as claimed in any one of the preceding claims, wherein the outer housing (10) includes at least one of: a through-bore (28) for receiving the inner assembly, a bolt hole (12) for frame fastening, and a stop (13) for preventing the inner assembly passing through the through-bore (28).

9. A mount as claimed in any one of the preceding claims, wherein the inner member (20) has: an anti-tilting, anti-rotation engine joining portion (22) for allowing the inner member (20) to be attached to a vehicle power-train.

10. A mount as claimed in claim 11 wherein the anti-tilt anti-rotation (22) portion includes a cup (24) for receiving a co-operating feature on a power-train.

11. A mount as claimed in any one of the preceding claims, wherein at least one plastics insert (40) comprises a glass filled polyamide, a self lubricating material and/or an engineered plastics material.

12. A mount of any one of the preceding claims, wherein said at least one outer plastics insert (40) interchangeable with a second altered plastics insert (10) that has an altered v-shaped angle modified to accommodate predetermined stiffness requirements so as to allow tuning of the engine mount.

13. A method of assembling an engine mount which includes an outer housing (10), an interchangeable inner member (20) and at least one elastomeric body (30) disposed to act between the member (20) and the housing (10) including inserting the inner member (20) and elastomeric body (30) into the housing including, prior to insertion, selecting at least one v-shaped outer plastics insert (40) from a set of plastics inserts having a selection of physical characteristics to determine the tuning of the mount and locating the or each inserts (40) to lie between the or each body (30) and the housing (10) after insertion.

14. A method as claimed in claim 13, including forming, prior to insertion, an inner assembly (50) by attaching the/or each elastomeric body (30) to the inner member and the/or each elastomeric body or respective body.

15. A method as claimed in claim 13, wherein the selection of physical characteristic is the angle of the v-shape.

16. A method as claimed in any one of claims 13 to 15 including providing said inner member (20) with an anti-rotation portion (22) with a recess (24) for providing a drop in location and retention of a projection (24') for a power train assembly.

## Patentansprüche

1. Motorlager mit einem äußeren Gehäuse (10) und einer inneren Anordnung (50), die einen inneren Körper (20) und wenigstens einen Elastomerkörper (30) aufweist, der an einer äußeren Oberfläche des inneren Körpers (20) befestigt ist, wobei die innere Anordnung (50) in dem äußeren Gehäuse (20) so angeordnet ist, daß der Elastomerkörper (30) zwischen dem inneren Körper (20) und dem äußeren Gehäuse (10) wirkt, **dadurch gekennzeichnet, daß** der innere Körper (20) austauschbar ist und daß das Lager wenigstens einen abstimmbaren, V-förmigen, äußeren Plastikeinsatz (40) aufweist, der zwischen dem Elastomerkörper (30) und dem äußeren Gehäuse (20) angeordnet ist, und wobei der wenigstens eine abstimmbare, V-förmige Plastikeinsatz (40) austauschbar ist, um das Motorlager abzustimmen.

2. Lager nach Anspruch 1, **dadurch gekennzeichnet, daß** der äußere Plastikeinsatz (40) oder die Einsätze einen Teil der inneren Anordnung (50) bilden.

3. Lager nach Anspruch 1 oder Anspruch 2, **dadurch gekennzeichnet, daß** der äußere Plastikeinsatz (40) durch Auswählen eines Einsatzes aus einem Satz Einsätzen abgestimmt wird, die unterschiedliche physikalische Eigenschaften aufweisen.

4. Lager nach einem der vorhergehenden Ansprüche, **dadurch gekennzeichnet, daß** die innere Anordnung (50) vorkomprimiert ist, bevor sie in das äußere Gehäuse (10) eingesetzt wird.

5. Lager nach einem der vorhergehenden Ansprüche, **dadurch gekennzeichnet, daß** die innere Anordnung (30) einen modularen, seitlichen Versteifer (130) aufweist.

6. Lager nach Anspruch 5, **dadurch gekennzeichnet, daß** der modulare, seitliche Versteifer (130) in der Lage ist, zusätzliche Steifigkeit zu schaffen, wenn eine hohe seitliche Steifigkeit verlangt wird.

7. Lager nach einem der vorhergehenden Ansprüche, **dadurch gekennzeichnet, daß** die innere Anordnung des weiteren eine Platte (110) aufweist, um eine Gleit- und Rückhalteoberfläche für den modularen, seitlichen Versteifer (130) zu bilden.

8. Lager nach einem der vorhergehenden Ansprüche, **dadurch gekennzeichnet, daß** das äußere Gehäuse (10) wenigstens ein Element aufweist, nämlich eine Durchgangsbohrung (28) zur Aufnahme der inneren Anordnung, ein Schraubenbolzenloch (12) zur Befestigung des Rahmens und einen Anschlag (13), um zu verhindern, daß die innere Anordnung durch die Durchgangsbohrung (28) hindurchgeht.

9. Lager nach einem der vorhergehenden Ansprüche, **dadurch gekennzeichnet, daß** der innere Körper (20) folgende Elemente hat: ein Antikipp-Antidreh-Maschinenverbindungsteil, das dem inneren Körper (20) ermöglicht, an einer Kraftübertragung befestigt zu werden.

10. Lager nach Anspruch 11, **dadurch gekennzeichnet, daß** die Antikipp-Antidreh-Vorrichtung (22) eine Haube (24) zur Aufnahme eines mitwirkenden Teils auf einer Kraftübertragung besitzt.

11. Lager nach einem der vorhergehenden Ansprüche, **gekennzeichnet durch** wenigstens einen Plastikeinsatz (40), der ein Glasfaserpolyamid, ein selbstschmierendes Material und / oder ein ausgeklügeltes Plastikmaterial bildet.

12. Lager nach einem der vorhergehenden Ansprüche, **dadurch gekennzeichnet, daß** wenigstens ein äußerer Plastikeinsatz (40) mit einem zweiten geänderten Plasteinsatz (10) austauschbar ist, der eine geänderte, V-förmige Winkelkonstellation aufweist, die so modifiziert ist, daß sie den vorbestimmten Steifigkeitserfordernissen entspricht, um **dadurch** die Anpassung des Motorlagers zu ermöglichen.

13. Verfahren zur Anordnung eines Motorlagers, das wenigstens ein äußeres Gehäuse (10), einen austauschbaren inneren Körper (20) und wenigstens einen Elastomerkörper (30) aufweist, der so angeordnet ist, daß er zwischen dem Körper (20) und dem Gehäuse (10) liegt, wobei der innere Körper (20) und der Elastomerkörper (30) in das Gehäuse einsetzbar sind und vor dem Einsetzen, wenigstens ein V-förmiger, äußerer Plastikeinsatz (40) aus einem Satz Plastikeinsätze ausgewählt wird, der eine Auswahl physikalischer Merkmale aufweist, um **dadurch** die Abstimmung des Lagers zu bestimmen und die Anordnung jedes Einsatzes (40) so festzulegen, daß er zwischen dem oder jedem Körper (30) und dem Gehäuse (10) liegt, nachdem er einsetzt worden ist.

14. Verfahren nach Anspruch 13, **gekennzeichnet durch** Verformen einer inneren Anordnung (50) vor dem Einsetzen **durch** Befestigen des oder jedes Elastomerkörpers (30) an dem inneren Körper und des oder jedes Elastomerkörpers oder entsprechenden Körpers.

15. Verfahren nach Anspruch 13, **dadurch gekennzeichnet, daß** die Auswahl der physikalischen Eigenschaften dem Winkel der V-Form entspricht.

16. Verfahren nach einem der vorhergehenden Ansprüche 13 bis 15, **dadurch gekennzeichnet, daß** der innere Körper (20) mit einem drehstabilen Teil (22) versehen ist, der eine Aussparung (24) zur Schaffung einer Vertiefung an Ort und Stelle und zum Zurückhalten eines Vorsprungs (24') einer Kraftübertragungsanordnung aufweist.

## Revendications

1. Support moteur comprenant un boîtier externe (10) et un ensemble interne (50) comprenant un élément interne (20) et au moins un corps élastomère (30) fixé à une surface externe de l'élément interne (20), l'ensemble interne (50) étant disposé dans le boîtier externe (10) de telle sorte que le corps élastomère (30) agit entre l'élément interne (20) et le boîtier externe (10), **caractérisé par le fait que** l'élément interne (20) est interchangeable et **par le fait que** le support comprend au moins un insert (40) externe en matière plastique, en forme de V, réglable, interposé entre le corps élastomère (30) et le boîtier externe (10), le au moins un insert (40) externe en matière plastique, en forme de V, réglable, étant interchangeable pour régler le support moteur.

2. Support selon la revendication 1, dans lequel l'insert (40) externe en matière plastique ou les inserts externes en matière plastique font partie de l'ensemble interne (50).

3. Support selon l'une des revendications 1 ou 2, dans lequel l'insert (40) externe en matière plastique est réglé par sélection d'un insert parmi un ensemble d'inserts ayant différentes caractéristiques physiques.

4. Support selon l'une quelconque des revendications précédentes, dans lequel l'ensemble interne (50) est pré-comprimé avant d'être introduit dans le boîtier externe (10).

5. Support selon l'une quelconque des revendications précédentes, dans lequel l'ensemble interne (30) comprend un élément de rigidification latéral modulaire (130).

6. Support selon la revendication 5, dans lequel l'élément de rigidification latéral modulaire (130) est capable de communiquer une rigidité supplémentaire lorsqu'une rigidité latérale élevée est souhaitée.

7. Support selon l'une quelconque des revendications précédentes, dans lequel l'ensemble interne comprend en outre une plaque (110) pour fournir une surface de coulissement et de retenue pour l'élément de rigidification latéral modulaire (130).

8. Support selon l'une quelconque des revendications précédentes, dans lequel le boîtier externe (10) comprend au moins l'un parmi : un trou traversant (28) pour recevoir l'ensemble interne, un trou de boulon (12) pour une fixation au châssis, et une butée (13) pour empêcher l'ensemble interne de traverser le trou traversant (28).

9. Support selon l'une quelconque des revendications précédentes, dans lequel l'élément interne (20) a : une partie de liaison moteur (22) anti-basculement, anti-rotation, pour permettre à l'élément interne (20) d'être fixé au groupe motopropulseur du véhicule.

10. Support selon la revendication 11, dans lequel la partie anti-basculement, anti-rotation (22) comprend une coupelle (24) pour recevoir un élément coopérant sur un groupe motopropulseur.

11. Support selon l'une quelconque des revendications précédentes, dans lequel au moins un insert (40) en matière plastique comprend un polyamide chargé de verre, un matériau auto-lubrifiant et/ou un matériau à base de matière plastique technique.

12. Support selon l'une quelconque des revendications précédentes, dans lequel ledit au moins un insert (40) externe en matière plastique est interchangeable avec un second insert (10) modifié en matière plastique, qui a un angle en forme de V modifié pour s'adapter aux exigences de rigidité prédéterminées de façon à permettre un réglage du support moteur.

13. Procédé d'assemblage d'un support moteur qui comprend un boîtier externe (10), un élément interne interchangeable (20) et au moins un corps élastomère (30) disposé de façon à agir entre l'élément (20) et le boîtier (10), comprenant l'introduction de l'élément interne (20) et du corps élastomère (30) dans le boîtier comprenant, avant l'introduction, la sélection d'au moins un insert (40) externe en matière plastique, en forme de V, à partir d'un ensemble d'inserts en matière plastique ayant une sélection de caractéristiques physiques pour déterminer le réglage du support et la disposition du ou de chaque insert (40) pour qu'il s'étende entre le ,ou chaque corps (30) et le boîtier (10) après introduction.

14. Procédé selon la revendication 13, comprenant la formation, avant l'introduction, d'un ensemble interne (50) par fixation du ou de chaque corps élastomère (30) à l'élément interne et du ou de chaque corps élastomère ou corps respectif.

15. Procédé selon la revendication 13, dans lequel la sélection de la caractéristique physique est l'angle de la forme de V.

16. Procédé selon l'une quelconque des revendications 13 à 15, comprenant le fait de doter ledit élément interne (20) d'une partie anti-rotation (22) avec une cavité (24) pour permettre la mise en place par pose et la retenue d'une saillie (24') pour un groupe motopropulseur.
